Europäisches Patentamt

European Patent Office

Office européen des brevets

(19)

(11) Veröffentlichungsnummer : **0 101 956**
**B1**

(12) **EUROPÄISCHE PATENTSCHRIFT**

(45) Veröffentlichungstag der Patentschrift :
17.08.88

(51) Int. Cl.⁴ : **G 01 K   7/20**

(21) Anmeldenummer : 83107500.7

(22) Anmeldetag : 29.07.83

(54) **Widerstandsthermometer.**

(30) Priorität : 27.08.82 DE 3231996

(43) Veröffentlichungstag der Anmeldung :
07.03.84 Patentblatt 84/10

(45) Bekanntmachung des Hinweises auf die Patenterteilung : 17.08.88 Patentblatt 88/33

(84) Benannte Vertragsstaaten :
CH FR GB LI NL

(56) Entgegenhaltungen :
DE-B- 2 460 648
FR-A- 2 295 402
ELEKTRONIK, Band 24, Nr. 10, Oktober 1975, Seite
106, München, DE; K. KRAUS: "Empfindliches Platin-
Widerstandsthermometer mit Linearisierung"
E.D.N. ELECTRICAL DESIGN NEWS, Band 26, Nr. 1, 7.
Januar 1981, Seiten 159-166, Boston, Massachusetts,
US; J. WILLIAMS: "Low-cost dual, quad FET op amps
implement complex functions"

(73) Patentinhaber : **Endress u. Hauser GmbH u.Co.**
**Hauptstrasse 1**
**D-7867 Maulburg (DE)**

(72) Erfinder : **Regtien, Paulus Petrus Leonardus, Dr.**
**A.M. de Jonglaan 13**
**NL-2624 LB Delft (NL)**

(74) Vertreter : **Leiser, Gottfried, Dipl.-Ing. et al**
**Patentanwälte Prinz, Leiser, Bunke & Partner Manzin-**
**gerweg 7**
**D-8000 München 60 (DE)**

## Beschreibung

Die Erfindung betrifft ein Widerstandsthermometer mit einem von der Temperatur nichtlinear abhängigen Meßwiderstand, der im Rückkopplungszweig eines ersten Operationsverstärkers liegt, dessen invertierender Eingang über einen Widerstand an eine konstante Referenzspannung gelegt ist, und mit einer einen Differenzverstärker enthaltenden Meßschaltung zur Messung des Spannungsabfalls am Meßwiderstand, der durch einen über den Meßwiderstand fließenden Strom erzeugt wird.

Ein Widerstandsthermometer dieser Art ist aus der DE-A-2 460 648 bekannt. Zur Erzielung eines linearen Zusammenhangs zwischen der Temperatur und dem Spannungsabfall am Meßwiderstand ist an den Ausgang des Operationsverstärkers, in dessen Rückkopplungszweig der Meßwiderstand liegt, ein Spannungsteiler angeschlossen, dessen Abgriff mit dem nichtinvertierenden Eingang des Operationsverstärkers verbunden ist. Dem Operationsverstärker kann ein geeignet dimensionierter Differenzverstärker nachgeschaltet sein, der mit dem Meßwiderstand in Zweileiterschaltung verbunden ist und die daran abfallende Spannung verstärkt. Durch Zuführung einer Hilfsspannung zu dem Differenzverstärker kann eine Nullpunktkompensation erzielt werden. Maßnahmen zur Empfindlichkeitseinstellung sind nicht beschrieben.

In der FR-A-2 295 402 ist ein Widerstandsthermometer beschrieben, bei welchem der Meßwiderstand in Vierleiterschaltung mit den beiden Eingängen eines Differenzverstärkers verbunden ist. In diesem Fall liegt der Meßwiderstand nicht im Rückkopplungszweig eines Operationsverstärkers, sondern im Emitterkreis eines als Spannungsfolger geschalteten Transistors, der den über den Meßwiderstand fließenden Strom liefert und an der Basis durch die Ausgangsspannung eines Operationsverstärkers gesteuert wird, dessen invertierender Eingang über einen Widerstand an eine konstante Referenzspannung gelegt ist. Zur Linearisierung des Zusammenhangs zwischen der Temperatur und dem Spannungsabfall am Meßwiderstand ist an den Ausgang einer dem Differenzverstärker nachgeschalteten Verstärkerstufe ein Spannungsteiler mit vorgegebenem Spannungsteilerverhältnis angeschlossen, dessen Abgriff mit dem nichtinvertierenden Eingang des Operationsverstärkers verbunden ist. Durch geeignete Bemessung der mit dem nichtinvertierenden Eingang des Differenzverstärkers verbundenen Widerstände wird eine Nullpunktkompensation erzielt. Es sind keine Maßnahmen zur Empfindlichkeitseinstellung angegeben.

Bei diesen bekannten Widerstandsthermometern, bei denen die Messung des temperaturabhängigen Widerstands auf dem Prinzip der Strom-Spannungs-Messung beruht, besteht das Problem, daß sich die verschiedenen Maßnahmen zur Linearisierung, Nullpunktkompensation und Empfindlichkeitseinstellung, soweit vorhanden, gegenseitig beeinflussen, so daß ein genauer Abgleich nur für eine bestimmte Einstellung besteht.

Aufgabe der Erfindung ist demgegenüber die Schaffung eines mit Strom-Spannungs-Messung in Vierleiterschaltung betriebenen Widerstandsthermometers, bei welchem mit geringem Schaltungsaufwand eine sehr gute Linearisierung in einem großen Temperaturbereich sowie eine präzise Empfindlichkeitseinstellung und eine Nullpunktkompensation ohne gegenseitige Beeinträchtigung erzielt werden.

Diese Aufgabe wird nach der Erfindung dadurch gelöst, daß die Differenzverstärkerschaltung einen zweiten und einen dritten Operationsverstärker enthält, deren nichtinvertierende Eingänge in Vierleiterschaltung mit Spannungsabgriffklemmen des Meßwiderstands verbunden sind und deren invertierende Eingänge miteinander über einen einstellbaren Abgleichwiderstand verbunden sind, daß die Ausgänge des zweiten und des dritten Operationsverstärkers über gleichgroße Widerstände mit den beiden Eingängen eines vierten Operationsverstärkers verbunden sind, dessen Ausgang den Ausgang der Meßschaltung bildet, daß an den nichtinvertierenden Eingang des vierten Operationsverstärkers eine von der Referenzspannung abgeleitete Spannung zur Nullpunktkompensation angelegt ist, und daß an den Ausgang des vierten Operationsverstärkers ein Spannungsteiler mit vorgegebenem Spannungsteilerverhältnis angeschlossen ist, dessen Abgriff mit dem nichtinvertierenden Eingang des ersten Operationsverstärkers verbunden ist.

Bei dem Widerstandsthermometer nach der Erfindung erfolgt die Linearisierung durch positive Rückkopplung des durch das Spannungsteilerverhältnis bestimmten Teils der temperaturabhängigen Ausgangsspannung der Differenzverstärkerschaltung zum Eingang des den Meßstrom liefernden Operationsverstärkers, so daß der Meßstrom in Abhängigkeit von der Temperatur verändert wird. Das zur Unterdrückung des nichtlinearen Terms der Ausgangsspannung einzustellende Spannungsteilerverhältnis läßt sich in Abhängigkeit von den Kenngrößen des Meßwiderstands und der Meßschaltung in jedem Fall leicht berechnen. Die auf diese Weise erzielte Linearisierung bleibt in einem großen Temperaturbereich in engen Toleranzgrenzen. Durch die besondere Ausbildung der Differenzverstärkerschaltung aus mehreren Operationsverstärkern wird erreicht, daß sich die Linearisierung, die mit Hilfe des einstellbaren Abgleichwiderstands zwischen den invertierenden Eingängen des zweiten und des dritten Operationsverstärkers bewirkte Empfindlichkeitseinstellung und die am nichtinvertierenden Eingang des vierten Operationsverstärkers erfolgende Nullpunktkompensation gegenseitig nicht beeinflussen. Da die Eingänge der Differenzverstärkerschaltung in Vierleiterschaltung mit Spannungsabgriffklemmen des Meßwiderstands verbunden sind, wird das Meßergebnis nicht durch Spannungsabfälle an Leiter- und Übergangswiderständen verfälscht.

Ausführungsbeispiele der Erfindung sind in der Zeichnung dargestellt. In der Zeichnung zeigt :
Fig. 1 das Schaltbild eines Widerstandsthermometers nach der Erfindung und
Fig. 2 das Schaltbild einer abgeänderten Ausführungsform des Widerstandsthermometers von Fig. 1.

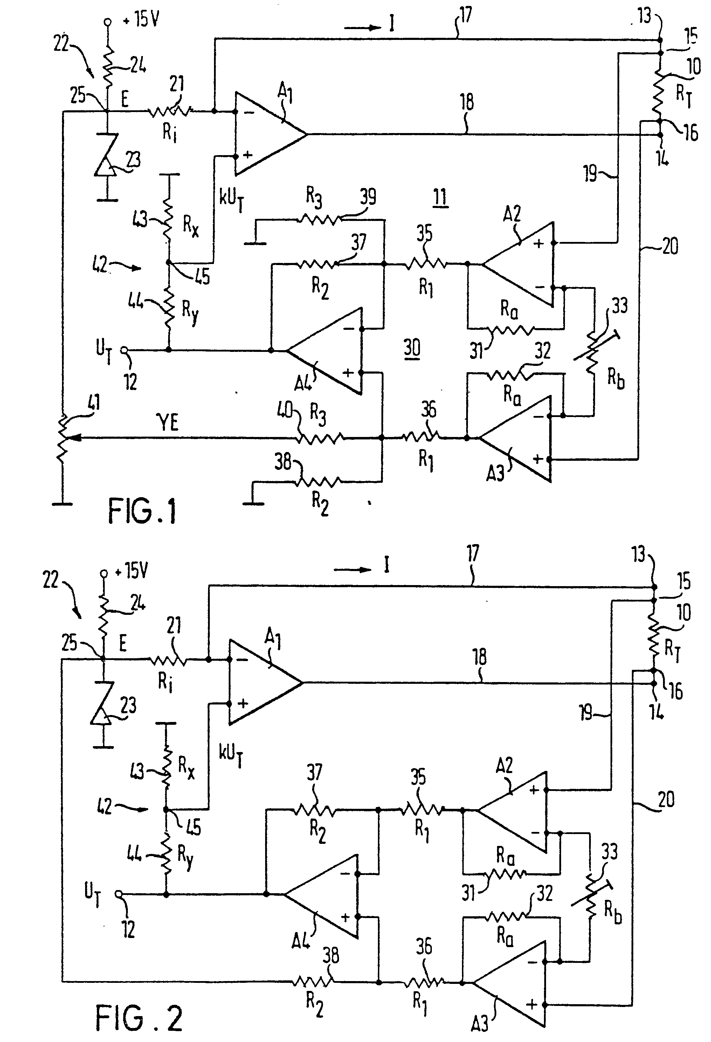

Das in Fig. 1 dargestellte Widerstandsthermometer besteht aus einem Meßwiderstand 10 mit dem temperaturabhängigen Widerstandswert $R_T$ und aus einer Meßschaltung 11, die am Ausgang 12 eine Spannung $U_T$ abgibt, die der Temperatur des Meßwiderstands 10 proportional ist.

Der Meßwiderstand 10 ist beispielsweise ein Platinwiderstand des Typs Pt 100 mit dem genormten Widerstandswert von 100 Ω bei 0 °C, der als Drahtwiderstand oder vorzugsweise in Dünnfilmtechnik auf einem Substrat gebildet sein kann.

Die Meßschaltung 11 ist so ausgebildet, daß sie die Messung des Spannungsabfalls am Meßwiderstand 10 in Vierleiterschaltung ermöglicht. Der Meßwiderstand ist zu diesem Zweck mit zwei Stromklemmen 13, 14 und mit zwei Spannungsklemmen 15, 16 ausgestattet. An die Stromklemmen 13, 14 sind zwei Leiter 17, 18 angeschlossen, über die ein Strom I durch den Meßwiderstand 10 geschickt wird. An die Spannungsklemmen 15, 16 sind zwei weitere Leiter 19, 20 angeschlossen, über die der vom Strom I verursachte Spannungsabfall am Meßwiderstand 10 abgegriffen wird. Diese Vierleitermessung ergibt bekanntlich den Vorteil, daß die Widerstände der Stromleiter 17, 18 und die Übergangswiderstände an den Stromklemmen 13, 14 nicht in die Spannungsmessung eingehen.

Der Meßwiderstand 10 liegt über die Leiter 17, 18 im Rückkopplungskreis zwischen dem Ausgang und dem invertierenden Eingang eines ersten Operationsverstärkers A1. Der invertierende Eingang des Operationsverstärkers A1 ist über einen Eingangswiderstand 21 mit einer Referenzspannungsquelle 22 verbunden, die eine konstante Referenzspannung E liefert. Der Eingangswiderstand 21 hat den Widerstandswert $R_i$. Die Referenzspannungsquelle 22 besteht bei dem dargestellten Beispiel aus einer Zener-Diode 23, die in Reihe mit einem Widerstand 24 an die Speisespannung von beispielsweise + 15 V gelegt ist. Die durch die Zener-Diode 23 bestimmte Referenzspannung E erscheint am Schaltungspunkt 25 zwischen der Zener-Diode und dem Widerstand 24.

Die Spannungsklemmen 15, 16 des Meßwiderstands 10 sind über die Leiter 19, 20 mit den beiden Eingängen einer Differenzverstärkeranordnung 30 verbunden, die drei weitere Operationsverstärker A2, A3 und A4 enthält. Der nichtinvertierende Eingang des zweiten Operationsverstärkers A2 ist über den Leiter 19 mit der Spannungsklemme 15 verbunden, und der nichtinvertierende Eingang des dritten Operationsverstärkers A3 ist über den Leiter 20 mit der Spannungsklemme 16 verbunden. Die Rückkopplungswiderstände 31, 32 der beiden Operationsverstärker A2, A3 haben den gleichen Widerstandswert $R_a$. Die invertierenden Eingänge der beiden Operationsverstärker A2, A3 sind miteinander über einen einstellbaren Abgleichwiderstand 33 des Widerstandswerts $R_b$ verbunden.

Die Ausgänge der beiden Operationsverstärker A2 und A3 sind über Widerstände 35, 36, die den gleichen Widerstandswert $R_1$ haben, mit den beiden Eingängen des vierten Operationsverstärkers A4 verbunden. Der Rückkopplungswiderstand 37 des Operationsverstärkers A4 hat den Widerstandswert $R_2$. Ein Widerstand 38 mit dem gleichen Widerstandswert $R_2$ ist zwischen dem nichtinvertierenden Eingang und Masse angeschlossen. Zwischen dem invertierenden Eingang und Masse liegt ein Widerstand 39 mit dem Widerstandswert $R_3$. Ein Widerstand 40 des gleichen Widerstandswerts $R_3$ verbindet den nichtinvertierenden Eingang mit dem Abgriff eines Potentiometers 41, das zwischen dem Schaltungspunkt 25 und Masse angeschlossen ist und somit an der Referenzspannung E liegt. Das Potentiometer 41 hat ein solches Spannungsteilerverhältnis, daß an seinem Abgriff die Spannung $\gamma E$ besteht.

Der Ausgang des vierten Operationsverstärkers A4 bildet den Ausgang 12 der Meßschaltung 11, an welchem die Temperaturmeßspannung $U_T$ zur Verfügung steht. An den Ausgang 12 ist ein Spannungsteiler 42 aus zwei Widerständen 43 und 44 angeschlossen. Der Widerstand 43 hat den Widerstandswert $R_x$, und der Widerstand 44 hat den Widerstandswert $R_y$. Der Abgriff 45 des Spannungsteilers 42 ist mit dem nichtinvertierenden Eingang des ersten Operationsverstärkers A1 verbunden. Der Spannungsteiler 42 hat das Spannungsteilerverhältnis k, so daß am nichtinvertierenden Eingang des Operationsverstärkers A1 die Spannung $kU_T$ anliegt.

Die aus den drei Operationsverstärkern A2, A3, A4 gebildete Differenzverstärkeranordnung 30 hat einen hohen Eingangswiderstand, und sie weist den Vorteil auf, daß die Verstärkungseinstellung, also die Einstellung der Meßempfindlichkeit, auf sehr einfache Weise mit Hilfe eines einzigen Widerstands, nämlich des Abgleichwiderstands 33, erfolgen kann.

Die am Potentiometer 41 abgegriffene Spannung $\gamma E$ wird über den Operationsverstärker A4 der Ausgangsspannung $U_T$ zum Zweck der Nullpunktkompensation überlagert.

Der über den Spannungsteiler 42 zum ersten Operationsverstärker A1 rückgeführte Ausgangsspannungsanteil $kU_T$ wirkt sich auf den Strom I aus, der über den Meßwiderstand 10 geschickt wird. Wie nachfolgend für verschiedene Fälle nachgewiesen wird, ist es durch geeignete Bemessung des Spannungsteilers 42 unter Berücksichtigung der übrigen Kenngrößen der Meßschaltung möglich, eine Linearisierung der Meßschaltung über einen großen Temperaturbereich zu erzielen, so daß die Ausgangsspannung $U_T$ der Temperatur des Meßwiderstands 10 proportional ist, obwohl sich bekanntlich der Widerstandswert $R_T$ des Meßwiderstands 10 in Abhängigkeit von der Temperatur T nach der folgenden Beziehung nichtlinear ändert :

$$R_T = R_0(1 + \alpha T + \beta T^2), \qquad (1)$$

worin $R_0$ der Meßwiderstandswert für die Temperatur $T = 0\,°C$ ist.

Für die Meßschaltung von Fig. 1 gelten die folgenden Beziehungen:

$$U_T = -AIR_T + \frac{R_2}{R_3}\gamma E$$

$$\text{mit } A = \frac{R_2}{R_1}\left(1 + \frac{2\,R_a}{R_b}\right) \qquad (2)$$

(Verstärkungsfaktor der Differenzverstärkeranordnung 30)

$$I = \frac{E - kU_T}{R_i} \quad (\text{Meßstrom}). \qquad (3)$$

Aufgrund der vorstehenden Gleichungen (1) bis (3) läßt sich die Ausgangsspannung $U_T$ als Funktion der Temperatur T folgendermaßen ausdrücken:

$$U_T = U_0 + ST(1 + NT) \qquad (4)$$

worin

$$U_0 = \frac{\dfrac{R_2}{R_3}\gamma E - A\dfrac{R_0}{R_i}E}{1 - kA\dfrac{R_0}{R_i}} \qquad (4a)$$

(Ausgangsspannung $U_T$ für $T = 0$ bzw. $R_T = R_0$)

$$S = \frac{-A\dfrac{R_0}{R_i}E\alpha}{1 - kA\dfrac{R_0}{R_i}} \quad (\text{Empfindlichkeit}) \qquad (4b)$$

$$N \approx \frac{\beta}{\alpha} + \frac{kA\dfrac{R_0}{R_i}\alpha}{1 - kA\dfrac{R_0}{R_i}} \qquad (4c)$$

Unter der Bedingung $N = 0$ ist $U_T$ proportional zu T. Dafür muß nach der Gleichung (4c) gelten:

$$kA\frac{R_0}{R_i} = \frac{-\beta}{\alpha^2 - \beta} \qquad (5)$$

In diesem Fall ist nach der Gleichung (4b):

$$S = \frac{\beta E}{\alpha k} \qquad (6)$$

Der Wert von k läßt sich somit aus der gewünschten Empfindlichkeit S berechnen.

Beispiel

$S = -50\ mVK^{-1}$
$\alpha = 3{,}9 \cdot 10^{-3}\ K^{-1}$
$\beta = -5{,}8 \cdot 10^{-7}\ K^{-2}$
$E = 6{,}2\ V$

ergibt:

$k = 1{,}844 \cdot 10^{-2}$

$kA\dfrac{R_0}{R_i} = 0{,}0367$

Aufgrund des errechneten Wertes von k können die Widerstandswerte $R_x$ und $R_y$ des Spannungsteilers 42 festgelegt werden.

Aus dem errechneten Wert für $kA\,R_0/R_i$ ergibt sich der Verstärkungsfaktor A der Differenzverstärkeranordnung 30, der mittels des Widerstands 33 einzustellen ist.

Für die Nullpunktkompensation soll gelten

$$U_0 = 0 \ .$$

Aus der Gleichung (4a) folgt daraus :

$$\frac{R_2}{R_3}\gamma = A\frac{R_0}{R_i} \tag{7}$$

Die Nullpunktkompensation ist also unabhängig von der Größe der Referenzspannung E.

Wenn der Meßwiderstand 10 kurzgeschlossen wird ($R_T = 0$), ist nach der Gleichung (2) :

$$U_T(R_T = 0) = \frac{R_2}{R_3}\gamma E \tag{8}$$

Ein Vergleich der Gleichungen (4a) und (4b) zeigt, daß ohne Kompensationsspannung ($\gamma E = 0$) die Ausgangsspannung $U_T$ bei $T = 0$ den folgenden Wert hat :

$$U_0 = \frac{S}{\alpha} \tag{9}$$

Damit diese Spannung zu Null kompensiert wird, muß die Kompensationsspannung $\gamma E$ gemäß den Gleichungen (7) und (4b) so eingestellt werden, daß gilt :

$$\frac{R_2}{R_3}\gamma E = A\frac{R_0}{R_i}E = -\frac{S}{\alpha}\left(1 - kA\frac{R_0}{R_i}\right) \tag{10}$$

Nach der Gleichung (8) ist dieser Wert gleich der Ausgangsspannung $U_T$ bei kurzgeschlossenem Meßwiderstand 10 ($R_T = 0$). Die Einstellung der Kompensationsspannung $\gamma E$ kann also bei beliebiger Temperatur dadurch erfolgen, daß der Meßwiderstand 10 kurzgeschlossen wird und die Ausgangsspannung $U_T$ durch Verstellen des Potentiometers 41 auf den aus der Gleichung (10) errechneten Wert eingestellt wird.

## Beispiel

Mit den zuvor angegebenen Zahlenwerten ergibt sich nach der Gleichung (10) der Wert :

$$\frac{S}{\alpha}\left(1 - kA\frac{R_0}{R_i}\right) = -12{,}350\ \text{V} \ .$$

Auf diesen Wert wird die Ausgangsspannung $U_T$ bei kurzgeschlossenem Meßwiderstand 10 durch Verstellen des Potentiometers 41 eingestellt. Der Empfindlichkeitsabgleich erfolgt mit Hilfe des Abgleichwiderstands 33 bei einem vorgegebenen festen Wert des Meßwiderstands 10, beispielsweise bei $R_T = R_0 = 100\ \Omega$.

Die mit Hilfe des Spannungsteilers 42 erzielte Linearisierung wird durch die Überlagerung der Kompensationsspannung nicht beeinträchtigt.

Die hohen Eingangswiderstände der Verstärker A2 und A3 verhindern einen Spannungsabfall an den Spannungsleitungen 19 und 20. Die Differenzverstärkeranordnung 30 mißt daher nur den reinen Spannungsabfall am Meßwiderstand 10, unabhängig von der Länge der Leiter 19 und 20.

Fig. 2 zeigt eine abgeänderte Ausführungsform des Widerstandsthermometers. Sie unterscheidet sich von der Ausführungsform von Fig. 1 dadurch, daß das Potentiometer 41 fehlt und der nichtinvertierende Eingang des Verstärkers A4 über den Widerstand 38 des Widerstandswerts $R_2$ direkt mit dem Schaltungspunkt 25, an dem die Referenzspannung E besteht, verbunden ist. Die beiden Widerstände 39, 40 des Widerstandswerts $R_3$ können daher entfallen.

Für diese Schaltung ist in der Gleichung für $U_T$ :

$$U_T = U_0 + ST(1 + NT) \tag{4}$$

die Spannung $U_0$ :

$$U_0 = \frac{-A\frac{R_0}{R_i}E + E}{1 - kA\frac{R_0}{R_i}} \tag{4a'}$$

5

während für S und N die gleichen Formeln (4b) bzw. (4c) wie im Fall der Schaltung von Fig. 1 gelten. Die Werte von k und kA $R_0/R_i$ lassen sich daher in gleicher Weise wie im Fall von Fig. 1 berechnen.

Zur Nullpunktkompensation wird die Ausgangsspannung $U_T$ bei $R_T = R_0$ mit Hilfe des Abgleichwiderstands 33 auf $U_T = 0$ eingestellt. Nach der Formel (4a') ist dann

$$A \cdot \frac{R_0}{R_i} = 1 .$$

Die Nullpunktkompensation ist also wieder unabhängig von der Größe der Referenzspannung E. Die Empfindlichkeit S ist dann nach der Formel (4b) :

$$S = \frac{-E\alpha}{1-k} .$$

Da k durch die Formel (5) festliegt, hängt die Empfindlichkeit S nur noch vom Wert der Referenzspannung E ab.

Beispiel

$$E = 6{,}285 \text{ V}$$
$$k = k \cdot A \frac{R_0}{R_i} = 0{,}0367 \quad \left( da \ A \frac{R_0}{R_i} = 1 \right)$$

ergibt :
$$S = -24{,}60 \text{ mV}/\text{K}$$

Wenn man eine bestimmte Empfindlichkeit wünscht, kann diese genau erzielt werden, wenn die Referenzspannung E nicht fest, sondern einstellbar ist. Man stellt dann die Referenzspannung E auf den Wert

$$E = -\frac{S}{\alpha} (1 - k)$$

ein, wenn S die gewünschte Empfindlichkeit ist. Die Nullpunktkompensation erfolgt wieder dadurch, daß mit dem Abgleichwiderstand 33 die Ausgangsspannung $U_T$ bei $R_T = R_0$ auf den Wert $U_T = 0$ eingestellt wird.

## Patentansprüche

1. Widerstandsthermometer mit einem von der Temperatur nichtlinear abhängigen Meßwiderstand (10), der im Rückkopplungszweig eines ersten Operationsverstärkers ($A_1$) liegt, dessen invertierender Eingang über einen Widerstand (21) an eine konstante Referenzspannung (E) gelegt ist, und mit einer eine Differenzverstärkerschaltung (30) enthaltenden Meßschaltung (11) zur Messung des Spannungsabfalls am Meßwiderstand (10), der durch einen über den Meßwiderstand (10) fließenden Strom (I) erzeugt wird, dadurch gekennzeichnet, daß die Differenzverstärkerschaltung (30) einen zweiten und einen dritten Operationsverstärker ($A_2$, $A_3$) enthält, deren nichtinvertierende Eingänge in Vierleiterschaltung mit Spannungsabgriffklemmen (15, 16) des Meßwiderstands (10) verbunden sind und deren invertierende Eingänge miteinander über einen einstellbaren Abgleichwiderstand (33) verbunden sind, daß die Ausgänge des zweiten und des dritten Operationsverstärkers ($A_2$, $A_3$) über gleichgroße Widerstände (35, 36) mit den beiden Eingängen eines vierten Operationsverstärkers ($A_4$) verbunden sind, dessen Ausgang den Ausgang (12) der Meßschaltung (11) bildet, daß an den nichtinvertierenden Eingang des vierten Operationsverstärkers ($A_4$) eine von der Referenzspannung (E) abgeleitete Spannung zur Nullpunktkompensation angelegt ist, und daß an den Ausgang (12) des vierten Operationsverstärkers ($A_4$) ein Spannungsteiler (42) mit vorgegebenem Spannungsteilerverhältnis (k) angeschlossen ist, dessen Abgriff (45) mit dem nichtinvertierenden Eingang des ersten Operationsverstärkers ($A_1$) verbunden ist.

2. Widerstandsthermometer nach Anspruch 1, dadurch gekennzeichnet, daß der nichtinvertierende Eingang des vierten Operationsverstärkers ($A_4$) über einen Widerstand (40) mit dem Abgriff eines Potentiometers (41) verbunden ist, an das die Referenzspannung (E) gelegt ist.

3. Widerstandsthermometer nach Anspruch 1, dadurch gekennzeichnet, daß der nichtinvertierende Eingang des vierten Operationsverstärkers ($A_4$) über einen Widerstand (38) mit der Referenzspannungsquelle (22) verbunden ist.

## Claims

1. A resistance thermometer comprising a measuring resistor (10) non-linearly dependent on the temperature which measuring resistor lies in the feedback circuit of a first operational amplifier ($A_1$) having an inverting input to which a constant reference voltage (E) is applied via a resistor (21), and a

measuring circuit (11) including a differential amplifier circuit (30) for measuring the voltage drop at the measuring resistor (10), which is produced by a current (I) flowing across the measuring resistor (10), characterized in that the differential amplifier arrangement (30) includes a second and a third operational amplifier ($A_2$, $A_3$) having non-inverting inputs which are connected in a four-wire circuit to voltage pickup terminals (15, 16) of the measuring resistor (10) and having inverting inputs which are connected together via an adjustable compensating resistor (33), that the outputs of the second and of the third operational amplifier ($A_2$, $A_3$) are connected via resistors (35, 36) of the same resistance to the two inputs of a fourth operational amplifier ($A_4$) the output of which forms the output (12) of the measuring circuit (11), that a voltage derived from the reference voltage (E) is applied to the non-inverting input of the fourth operational amplifier ($A_4$) for zero point compensation and that a voltage divider (42) having a predetermined voltage divider ratio (k) is connected to the output (12) of the fourth operational amplifier ($A_4$), the tap (45) of which voltage divider is connected to the non-inverting input of the first operational amplifier ($A_1$).

2. Resistance thermometer according to claim 1, characterized in that the non-inverting input of the fourth operational amplifier ($A_4$) is connected via a resistor (40) to the tap of a potentiometer (41) to which the reference voltage (E) is applied.

3. Resistance thermometer according to claim 1, characterized in that the non-inverting input of the fourth operational amplifier ($A_4$) is connected to the reference voltage source (22) via a resistor (38).

**Revendications**

1. Thermomètre à résistance comportant une résistance de mesure (10) qui est fonction non linéaire de la température et qui se trouve dans le circuit de contre-réaction d'un premier amplificateur opérationnel ($A_1$) dont l'entrée soustractive est amenée, par l'intermédiaire d'une résistance (21), à une tension de référence constante (E), et comportant un circuit de mesure (11), contenant un circuit (30) à amplificateurs différentiels, pour la mesure, à la résistance de mesure (10), de la chute de tension produite par un courant (I) qui passe par la résistance de mesure (10), caractérisé en ce que le circuit (30) à amplificateurs différentiels contient un second et un troisième amplificateurs opérationnels ($A_2$, $A_3$) dont les entrées non soustractives sont reliées, dans un circuit à quatre conducteurs, aux bornes (15, 16) de prise de tension de la résistance de mesure (10) et dont les entrées soustractives sont reliées l'une à l'autre par l'intermédiaire d'une résistance d'équilibrage réglable (33) ; en ce que les sorties du second et du troisième amplificateurs opérationnels ($A_2$, $A_3$) sont reliées, par l'intermédiaire de résistances de même valeur (35, 36), aux deux entrées d'un quatrième amplificateur opérationnel ($A_4$) dont la sortie forme la sortie (12) du circuit de mesure (11) ; en ce qu'à l'entrée non soustractive du quatrième amplificateur opérationnel ($A_4$) existe une tension dérivée de la tension de référence (E) pour la compensation du point zéro ; et en ce qu'à la sortie (12) du quatrième amplificateur opérationnel ($A_4$) est relié un diviseur de tension (42), à rapport de division de tension prescrit (k), dont la prise (45) est reliée à l'entrée non soustractive du premier amplificateur opérationnel ($A_1$).

2. Thermomètre à résistance selon la revendication 1, caractérisé en ce que l'entrée non soustractive du quatrième amplificateur opérationnel ($A_4$) est reliée, par l'intermédiaire d'une résistance (40), à la prise d'un potentiomètre (41) auquel est amenée la tension de référence (E).

3. Thermomètre à résistance selon la revendication 1, caractérisé en ce que l'entrée non soustractive du quatrième amplificateur opérationnel ($A_4$) est reliée, par l'intermédiaire d'une résistance (38), à la source de tension de référence (22).

FIG.1

FIG.2